# EUROPEAN PATENT APPLICATION

(11) **EP 4 686 628 A1**
(43) Date of publication of application: **04.02.2026**
(21) Application number: 24191400.1
(22) Date of filing: 29.07.2024
(51) Int. Cl.: B60T 15/00, B60T 13/26

(54) **PARKING VALVE ASSEMBLY FOR A BRAKE SYSTEM, BRAKE SYSTEM AND A TRAILER**

(71) Applicant: KB Intellectual Property GmbH & Co. KG, 82049 Pullach (DE)
(72) Inventor: Koncz, Laszlo, 80809 München (DE); Négyesi, Zoltán Ferenc, 80809 München (DE)

(57) **Abstract**

A parking valve assembly (1) for a pneumatic brake system (50) is disclosed. The parking valve assembly (1) comprising:
- a valve assembly supply port (2) configured to receive a pneumatic supply pressure;
- at least one valve assembly output port (3) configured to output a pneumatic output pressure;
- a valve assembly control port (4) configured to receive a pneumatic control pressure; and
- a pressure-controlled valve (6), wherein
the pressure-controlled valve (6) comprises a first control inlet (6.3) connected to the valve assembly control port (4) and a second control inlet (6.4) connected to the at least one valve assembly output port (3), wherein the pressure-controlled valve (6) is configured to connect the valve assembly supply port (2) to the at least one valve assembly output port (3), if the control pressure from the valve assembly control port (4) supplied to the first control inlet (6.3) exceeds a predetermined threshold or if a pressure supplied to the second control inlet (6.4) from the at least one valve assembly output port (3) exceeds a predetermined threshold.

Further, a brake system and a trailer are disclosed.

## Description

The present disclosure relates to a parking valve assembly for a pneumatic brake system, a brake system and a trailer.

Trailers, in particular for commercial vehicles, comprising self-activated brakes like spring-loaded brake elements need a reliable solution to deactivate the spring-loaded brake elements when the vehicle is moving with the trailer. Otherwise, there is a risk that the brake elements may be activated unintendedly when the vehicle is moving. When the vehicle is in stand still, e.g., in a parking state, the brakes shall be activated reliable.

Therefore, it is an object of the present disclosure, to provide a solution allowing a reliable deactivation of the brake elements when the vehicle is moving.

This object is achieved by the subject matter of the independent claims. Further embodiments are the subject matter of the dependent claims, the following description and the drawings.

According to an aspect of the present disclosure, a parking valve assembly for a pneumatic brake system is provided. The parking valve assembly comprises a valve assembly supply port configured to receive a pneumatic supply pressure, at least one valve assembly output port configured to output a pneumatic output pressure, a valve assembly control port configured to receive a pneumatic control pressure, in particular a first pneumatic control pressure, and a pressure-controlled valve.

The pressure-controlled valve may comprise a first control inlet connected to the valve assembly control port and a second control inlet connected to the at least one valve assembly output port. The pressure-controlled valve is configured to connect the valve assembly supply port to the at least one valve assembly output port, if the control pressure from the valve assembly control port supplied to the first control inlet exceeds a predetermined threshold or if a pressure supplied to the second control inlet from the at least one valve assembly output port exceeds a predetermined threshold. Both thresholds may be identical or different.

The pneumatic output pressure supplied from the at least one valve assembly output port may be configured or used to deactivate brake elements of a brake system the parking valve assembly is provided in. The output pressure may be a pressure that is used as a control pressure releasing the actual pressure supplied to the brake elements or it may be a pressure that can be directly supplied to the brake elements for deactivation.

The parking valve assembly comprises two ways to establish a connection between the valve assembly supply port and the at least one valve assembly output port. On the one hand, the connection may be established actively by supplying the first pneumatic control pressure to the first control inlet. This allows access e.g. from a control unit of the brake system to establish the connection, in particular initially. On the other hand, once the connection is established, the parking valve assembly may be configured to maintain the connection between the valve assembly supply port and the at least one valve assembly output port. This may be realized by the second control inlet of the pressure-controlled valve assembly, whereby the pressure from the at least one valve assembly output port is supplied to this second control inlet. If this pressure exceeds the corresponding predetermined threshold, the connection is maintained. I.e., the connection is self-maintaining. As the pneumatic output pressure from the at least one valve assembly output port may be used for deactivating the brake elements of a brake system, the parking valve assembly according to the present disclosure allows to deactivate the brake elements in a reliable and durable manner. In particular, a malfunction like a drop of pressure at the valve assembly control port of the parking valve assembly, e.g. due to a leakage at the valve assembly control port or due to a malfunction of the control unit does not affect the connection once established.

According to one embodiment, the pressure-controlled valve is a relay valve. A pneumatically controlled relay valve is independent from an electric or electronic activation. In particular, when the pressure-controlled valve is configured as a proportional relay valve, it is possible to control the brake elements between a released state and a fully activated state. I.e., the parking valve assembly may then be used for supplying a pneumatic output pressure for service braking, e.g., when the main service brake function of the trailer is not available.

According to one embodiment, the parking valve assembly further comprises a sliding element configured to be moved between a first sliding element position and a second sliding element position according to the control pressure, in particular the first control pressure, from the valve assembly control port supplied to the first control inlet and/or according to the pressure supplied to the second control inlet. The sliding element may be configured as an element extending along a moving direction between the first sliding element position and the second sliding element position. The sliding element may comprise an axis extending along the moving direction. In particular, the sliding element may be configured as a piston or as a rod, wherein its axis is in parallel to the moving direction. The sliding element may be configured to establish the connection between the valve assembly supply port and the at least one valve assembly output port when it is in the second sliding element position and to block the connection when it is in the first sliding element position. For blocking or establishing the connection, the sliding element may comprise respective sealing elements and/or recesses and/or protrusions and/or openings and/or channels configured to block and to establish the connection depending on the sliding element position. In particular, the sealing elements and/or recesses and/or protrusions and/or openings and/or channels may be configured to interact with sealing elements and/or recesses and/or protrusions and/or openings and/or channels of a housing or of a valve body, the sliding element is provided in. The sliding element is therefore configured as a pneumatic element that can be realized as a reliable and durable element. Sealing elements like O-rings can be designed durable over lifetime so that maintenance effort of the parking valve assembly can be low. The same applies for the recesses and/or protrusions and/or openings and/or channels. Additionally or alternatively, for blocking or establishing the connection the sliding element may be configured to move a blocking element by abutting to the blocking element for blocking or establishing the connection. I.e., the sliding element may be a control element configured to move the blocking element.

The pressure-controlled valve may comprise a first pressure chamber and a second pressure chamber, A first piston is movably provided in the first pressure chamber limiting the first pressure chamber. A second piston is movably provided in the second pressure chamber limiting the second pressure chamber. The first pressure chamber is connected to the first control inlet and the second pressure chamber is connected to the second control inlet. The first piston and the second piston may be configured to apply a force on the sliding element according to the pressure acting on the first piston, in particular the control pressure, and on the second piston, in particular the output pressure. As the first pressure chamber is connected to the first control inlet, the first piston may apply a force on the sliding element to initially establish the connection from the valve assembly supply port to the at least one valve assembly output port. This is realized by moving the sliding element from the first sliding element position to the second sliding element position by a force generated by the control pressure supplied to the first pressure chamber and acting on the first piston.

Preferably, when the sliding element is moved from the first sliding element position to the second sliding element position, the second piston is also moved in a corresponding position. Thereby, the second piston is in a position, where it can hold the sliding element in the second sliding element position once the output pressure is supplied to the second pressure chamber to act on the second piston. For this purpose, the sliding element may comprise sealing elements and/or recesses and/or protrusions and/or openings and/or channels configured to establish a connection from the at least one valve assembly output port of the parking valve assembly to the second pressure chamber. I.e., once the sliding element is in the second sliding element position, pneumatic output pressure is supplied to the second pressure chamber.

The second pressure chamber may be independent from the first pressure chamber. I.e., when the pressure in the first pressure chamber drops due to a controlled venting of the first pressure chamber, e.g., by venting the valve assembly control port, or due to a malfunction, the sliding element is kept in the second sliding element position due to the pressure acting on the second piston in the second pressure chamber. I.e., the once established connection from the valve assembly supply port to the at least one valve assembly output port is maintained by the sliding element in the second sliding element position. Thereby, the output pressure at the at least one output port is maintained and therefore, the brake elements of the brake system the parking valve assembly may be provided in are reliably deactivated.

According to one embodiment, the second piston is connected to the sliding element or formed as one piece with the sliding element. Thereby, a combination of the sliding element and the second piston is provided. This design of the sliding element and the second piston ensures that the second piston is moved the same distance as the sliding element when the sliding element is moved between the first sliding element position and the second sliding element position.

The use of pistons allows a relatively free configuration of the thresholds mentioned above for establishing the connection respectively for maintaining it. In particular, one or more reset elements like reset springs may act on the pistons to reset them. Therefore, by setting a dimension of the respective piston faces of the first piston and/or the second piston can in combination with the spring rate of the spring element be used to set the corresponding thresholds.

According to one embodiment, the second pressure chamber is limited by the first piston. I.e., the volume of the second pressure chamber may depend on the position of the first piston relative to the second piston. In particular, the first piston may abut to the second piston due to the control pressure supplied to the first pressure chamber. I.e., thereby the second piston may be moved simultaneously to the first piston when the control pressure is supplied to the first pressure chamber. In this case, the first piston may abut to the second piston. Both pistons may form a block that is moved. In this state, the second pressure chamber limited by the first piston and by the second piston may comprise its minimum extension. This arrangement of the first piston and the second piston allows a compact design of the parking valve assembly. In particular, the first piston and the second piston may be guided in the same housing, respectively in the same cylinder. In particular, the second pressure chamber may be provided in the first piston. I.e., the second piston is at least partially provided in the first piston. In other words: the second piston is movably provided in the first piston and preferably guided by the first piston. This allows a compact design of the parking valve assembly in the moving direction of the first and the second piston. The second piston may have a smaller extension perpendicular to the moving direction, in particular a smaller diameter.

According to one embodiment, the second piston is connected to the sliding element or formed as one piece with the sliding element. Thereby, a combination of the sliding element and the second piston is provided. This design of the sliding element and the second piston ensures that the second piston is moved the same distance as the sliding element when the sliding element is moved between the first sliding element position and the second sliding element position.

According to one embodiment, the second control inlet is provided on the sliding element. The sliding element may comprise a channel and or a recess, in particular extending partially along the moving direction and connecting the second control inlet with the second pressure chamber. This allows a compact design of the sliding element and of the parking valve assembly in general. In particular, when the second control inlet is provided on the sliding element, the connection from the at least one valve assembly output port may be established only by moving the sliding element and thereby the second control inlet into the second sliding element position.

According to one embodiment, the parking valve assembly further comprises a pressure output port configured to output the supply pressure supplied to the valve assembly supply port. This port may be configured as a port connected by a branching line to the valve assembly supply port. Thereby, the parking valve assembly, may act as an interface for the brake system the parking valve assembly may be provided in, wherein supply pressure may be supplied to the brake system. This supply pressure may in particular be used for a shunt function of the brake system, which is described later.

According to one embodiment, the parking valve assembly further comprises a switching element. The switching element may comprise a first switching state configured to disconnect the second opening of the pressure-controlled valve from the at least one valve assembly output port and connecting the valve assembly supply port to the at least one valve assembly output port. Additionally or alternatively, the switching element may comprise a second switching state configured to connect the second opening of the pressure-controlled valve to the at least one valve assembly output port and to disconnect the valve assembly supply port from the at least one valve assembly output port. The first switching state of the switching element may be a bypass switching state, whereby the second opening of the pressure-controlled valve is disconnected from the at least one valve assembly output port. I.e., pneumatic pressure supplied to the at least one valve assembly output port cannot be controlled by the pressure-controlled valve. Instead, the connection may be a direct connection from the valve assembly supply port to the at least one valve assembly output port. In this particular state of the switching element, the pressure-controlled valve is bypassed. The bypassing may be used for realizing a shunt function of the brake system the parking valve assembly is provided in. This is explained in more detail later in this document. Otherwise, when the switching element is in the second switching state , the switching element may be configured not to affect the pneumatic pressure supplied from the second opening of the pressure-controlled valve to the at least one valve assembly output port. The switching element may then be in a pass-through state.

According to one embodiment, the parking valve assembly may further comprise a second valve assembly control port configured to receive a second control pressure. The switching element may comprise a control inlet connected to the second valve assembly control port. The switching element may be configured to switch into the second switching state if the second control pressure supplied to the control port exceeds a predetermined threshold. Additionally or alternatively, the switching element may be configured to switch into the first switching state if the second control pressure supplied to the control port is below the predetermined threshold. By supplying the respective control pressure to the second valve assembly control port, the switching state may be controlled actively, e.g. by supplying a respective pressure from a brake system supply port like a coupling head of the trailer.

The switching element may be configured to return in the first switching state when the second control pressure drops below the predetermined threshold, in particular when the coupling head is disconnected or vented. In this case, in particular when the trailer is in a parking state, this ensures that the pressure-controlled valve is bypassed in this state, whereby unintentional release of the brake elements of the brake system the parking valve assembly is provided in is avoided.

According to one embodiment, the switching element comprises a switching element sliding element configured to be moved between a first switching element sliding element position and a second switching element sliding element position according to the second control pressure. The switching element sliding element may be configured as a piston or as a slider, wherein the switching element sliding element may comprise sealing elements and/or recesses and/or protrusions and/or openings and/or channels configured to block and to establish the connections according to the first switching state and according to the second switching state of the switching element. The distance between first switching element sliding element position and the second switching element sliding element position may be arranged on an extension of the distance defined by the first sliding element position and the second sliding element position of the pressure-controlled valve. This leads to a compact design of the parking valve assembly as these elements are arranged without offset to each other.

According to one embodiment, the parking valve assembly comprises a valve body, wherein the pressure-controlled valve is provided in the valve body. Additionally or alternatively, the switching element is provided in the valve body. The valve body may be formed by a monolithic block comprising sealing elements and/or recesses and/or protrusions and/or openings and/or channels configured to interact with moving parts of the parking valve assembly for establishing or disconnecting the respective connections described above. In particular, the valve body may guide the first piston and/or the second piston and/or the sliding element of the pressure-controlled valve and/or the switching element sliding element and/or the valve body may comprise the valve assembly supply port and/or the at least one valve assembly output port and/or the valve assembly control port and/or the second valve assembly control port and/or the pressure output port. The partial or complete integration of some or all of these elements leads to a compact design of the parking valve assembly. Preferably all these elements are provided in the valve body, whereby the parking valve assembly may be configured as an integral valve.

According to one embodiment, the parking valve assembly comprises an exhaust, wherein the pressure-controlled valve is configured to connect the at least one valve assembly output port to the exhaust. The pressure-controlled valve may be configured as a valve with a spring reset. The pressure-controlled valve may be configured to connect the at least one valve assembly output port to the exhaust due to the spring reset, when the pressure supplied to the first control port and to the second control port is below a certain threshold set by the spring reset. I.e., the at least one valve assembly output port is vented when no pressure is supplied to the first control port and to the second control port and this may lead to an automatic activation of the brakes of the brake system the parking valve assembly may be provided in.

According to a further aspect of this disclosure, a brake system for a trailer is provided.

For a person skilled in the art, it is clear that features and details related to the brake system which were described above in the context of the parking valve assembly, may also be seen at least as optional embodiments of the brake system described in the following.

The brake system comprises a parking valve assembly as described above and/or the parking valve assembly is configured to supply an output pressure and configured to self-maintain the output pressure.

The brake system further comprises a control unit, a brake system supply port and at least one brake element.

The brake system may be configured to deactivate the at least one brake element when the output pressure from the parking valve assembly exceeds a predetermined threshold. Thereby the at least one brake element may be deactivated permanently and reliably.

The at least one brake element is pressure-operated and configured to be activated when a brake pressure supplied to the at least one brake element is below a predetermined threshold, in particular, when the at least one brake element is vented. In particular, the pressure operated brake element may be configured as a spring-loaded brake element.

The control unit may be configured to control a pneumatic control pressure supplied as the control pressure to the first valve assembly control port. Thereby, the control unit may control the connection of the pressure-controlled valve from the valve assembly supply port to the at least one valve assembly output port.

As brake system supply port, the brake system may comprise a coupling head of the trailer configured to be connected to a towing vehicle like a commercial vehicle for receiving a supply pressure.

The control unit may be configured as electro-pneumatic control unit.

The control unit may be configured to supply the control pressure to the valve assembly control port. Therefore, the valve assembly supply port may be connected to the control unit, whereby pressure supplied to the brake system supply port, e.g. a coupling head of the brake system configured to be connected to a towing vehicle, can be supplied to the valve assembly supply port via or by the control unit.

The control unit may be configured to activate a parking state by venting the at least one valve assembly output port. The venting may be carried out by the control unit.

According to one embodiment, the brake system is configured to deactivate a parking state, by supplying a control pressure exceeding the predetermined threshold to the valve assembly control port. Thereby, the brake system is configured to release the at least one brake element when the pneumatic output pressure from the at least one output port of the parking valve assembly exceeds a predetermined threshold, e.g. set by the spring of the spring-loaded brake element.

According to one embodiment, the pneumatic output pressure may be used as a control pressure, in particular by the control unit, wherein a corresponding brake pressure is generated to release the at least one brake element. This allows a realisation of a smaller parking valve assembly. According to another embodiment, the pneumatic output pressure may be directly used as brake pressure to release the at least one brake element. This allows the realisation of a less complex brake system as the pneumatic output pressure may be supplied directly to the at least one brake element.

According to one embodiment, the brake system is configured to maintain the deactivation of the parking state after deactivation when the control pressure reduced below the predetermined threshold.

As the parking valve assembly is configured to self-maintaining the output pressure supplied by the at least one output port, the deactivated parking state is also maintained reliably and durably.

According to one embodiment, the brake system comprises a control valve assembly configured as a shunt valve or as a part of a park and shunt valve. This allows to manually control the parking and/or shunt state of the brake system even if no pressure is supplied to the brake system supply port, like a coupling head.

According to one embodiment, the brake system comprises a parking valve assembly with a second valve assembly control port configured to receive a second control pressure and a switching element as described above. The brake system may further comprise a control valve assembly and a pressure reservoir, wherein the control valve assembly is configured to connect the pressure reservoir to the valve assembly supply port when the switching element is in the first switching position.

This embodiment relates to a parked trailer, wherein the brake system supply port is disconnected. In this particular case, the brake system may comprise a shunt function to move the trailer without supplying pressure to the brake system supply port, in particular without supplying pressure to the coupling head.

In this case, the first control port and the second control port of the parking valve assembly are depressurized. In addition, the at least one output port is depressurized and therefore, the at least one brake element is activated. To move the trailer without supplying pressure to the brake system supply port, the brake system is configured to supply pressure from the pressure reservoir of the brake system, which may be configured as a pressurized air tank, with the valve assembly supply port. As in this state of the brake system the second valve assembly control port is depressurized, the switching element is in its first switching state, wherein the pressure-controlled valve of the parking valve assembly is bypassed and wherein a direct connection from the valve assembly supply port to the at least one valve assembly output port is established.

By switching the control valve assembly in a connecting state, a connection is established from the pressure reservoir to the valve assembly supply port. Due to the first switching state of the switching element of the parking valve assembly, the pressure from the pressure reservoir is therefore directly supplied from the valve assembly supply port to the at least one valve assembly output port and output from the output port as pneumatic output pressure. When this output port exceeds the predetermined threshold for releasing the at least one brake element, the at least one brake element is released and the parking state of the trailer is movable. Thereby, the brake system comprises a shunt function.

The control valve assembly may be configured as a manually operated valve assembly, allowing an operator to manually switch to the shunt state of the brake system. In particular, the control valve assembly may be configured as a shunt valve or as a part of a park and shunt valve.

According to one embodiment, the brake system comprises a pressure reservoir. The pressure reservoir may act as a pressure source for the brake system, if no towing vehicle is connected to the trailer or if a pressure supplied from the towing vehicle drops unintendedly. The brake system may be configured to recharge the pressure reservoir, in particular from the towing vehicle, to ensure a needed pressure value.

Additionally or alternatively, the brake system may be configured to switch to a shunt state when the at least one brake element is activated. I.e., when the trailer is parked, it can be moved by deactivating the brake elements in the shunt state.

The brake system may be configured to supply pressure from the pressure reservoir to the valve assembly supply port via a control valve assembly. The control valve assembly may be configured as a shunt valve or as a park & shunt valve. Thereby, it can be used to release a pressure needed for the shunt state or to activate the shunt state. The control valve assembly may be manually operated or automatically operated. A manual operation of the control valve assembly allows the interaction of an operator, so that it is ensured that the operator is aware that the shunt state is activated. In a normal state, the control valve assembly may supply the pressure from a brake system supply port to the valve assembly supply port.

According to one embodiment, the parking valve assembly of the brake system comprises a pressure output port as described above, wherein the brake system comprises a blocking valve configured to connect and to block the pressure output port to the control unit or to the at least one brake element. Thereby, a pressure from the pressure output port may be used to control the brake elements, in particular to deactivate the brake elements. The blocking valve may comprise a first switching position, wherein the pressure output port is connected to the control unit, wherein the at least one valve assembly output port is blocked or disconnected from the control unit. In this switching position, the output pressure from the at least one valve assembly output pressure is blocked and cannot be supplied to the control unit and therefore it cannot control the brake elements.

The blocking valve may be a pressure-controlled valve assembly or a manually controlled valve assembly. A pressure-controlled valve assembly will react automatically and switch to the corresponding switching position if the pressure supplied to a control inlet of the blocking valve. E.g., the control inlet may be connected to the brake system supply port, wherein the blocking valve is configured, e.g. by a reset spring element, to switch to the first switching position if the pressure at the brake system supply port drops. I.e., when the trailer is parked, this pressure drops as well and therefore, the blocking valve switches to the first switching position to ensure that a shunt state can be activated just by operating the control valve assembly, e.g., the shunt valve. In particular, the blocking valve may be configured as a 3/2 valve and/or a normally closed valve configured to switch to the first switching position if its control inlet is depressurized. "Normally closed" refers to the blocking of the at least one valve assembly output port to the control unit.

According to one embodiment, the blocking valve described above may be integrated in the parking valve assembly to form an integrated parking valve assembly design.

Alternatively, the brake system may comprise a second control valve assembly configured to connect the valve assembly control port to the pressure reservoir. This connection may be used in a shunt state of the brake system. The connection to the pressure reservoir may be a direct connection or a connection via intermediate elements. By connecting the valve assembly control port to the pressure reservoir, a control input can be supplied to the parking valve assembly to directly control the brake elements in the shunt state.

According to one embodiment, the parking valve assembly of the brake system comprises a pressure output port as described above in the description of the parking valve assembly, wherein the connection between the valve assembly control port and the pressure reservoir is established via the pressure output port. I.e., a supply pressure may be supplied to the valve assembly supply port, wherein via a direct connection, in particular through the valve body of the parking valve assembly, the supply pressure may be also supplied to the pressure output port. This allows a direct connection from the valve assembly supply port to the pressure output port. Further the parking valve assembly may be configured as a compact valve.

The second control valve assembly may be or comprise a pressure-controlled valve assembly or a manually controlled valve assembly or a combination thereof. The pressure-controlled valve assembly may comprise a double check valve connecting either the control unit or the pressure reservoir to the valve assembly control port, wherein for the shunt state, a connection to the pressure reservoir may be established. By using such pressure-controlled elements, a connection to the control port is established automatically, wherein by a manually controlled valve assembly an operator is sure that the shunt state is indeed activated and that the trailer may move.

According to one embodiment, the second control valve assembly described above may be integrated in the parking valve assembly to form an integrated parking valve assembly design.

According to one embodiment, the brake system is configured to switch to an override state. The override state may be a state, wherein an unintended activation of the brake elements due to a drop of the supply pressure, e.g. due to a leakage, may be avoided. In particular, when the vehicle is moving and a supply pressure used for deactivating the brake elements drops, the override state can avoid an activation of the brake elements and therefore increase the safety of the brake system. The override state may be configured to allow a moving of the trailer and the towing vehicle for a predetermined distance and/or time span before the brake elements are activated to secure the trailer.

As a pressure source, the brake system may comprise a pressure reservoir. The pressure reservoir may be the same pressure reservoir as it is described above in the context of the shunt function or a different pressure reservoir. If it's the same pressure reservoir, the brake system is less complex, wherein several smaller pressure reservoirs allow a more flexible design of the brake system.

According to one embodiment, the brake system is configured to activate the override state by supplying a control pressure to the valve assembly control port. This allows to use the existing elements of the brake system, in particular to control the brake elements from the valve assembly control port. The override state may according to this embodiment be activated only by supplying the corresponding control pressure to the valve assembly control port. This control pressure may be a control pressure from the pressure reservoir.

In the override state, the brake system may be configured to supply the pressure from the pressure reservoir to the valve assembly supply port in reaction to supplying the control pressure to the valve assembly control port. This may be realized by an, in particular pressure controlled, override valve, wherein the override valve is configured to connect the valve assembly supply port to the pressure reservoir, when the control pressure is supplied to a control inlet of the override valve.

The override valve may comprise a first switching position connecting the valve assembly supply port to the brake system supply port and a second switching position connecting the valve assembly supply port to the pressure reservoir. In particular, the override valve may be configured as a 3/2 valve and/or a normally open valve configured to switch to the first switching position if its control inlet is depressurized. "Normally open" refers to the connection of the at least one valve assembly supply port to the brake system supply port, e.g. via the control valve assembly.

In particular, the brake system is configured to connect the pressure reservoir to the valve assembly supply port in reaction to supplying the control pressure to the valve assembly control port.

By supplying the pressure from the pressure reservoir to the valve assembly supply port, the existing structure respectively the existing elements may be used to activate the override state. Advantageously, the brake system according to these embodiments is less complex.

According to a further aspect of this disclosure, a trailer for a vehicle, in particular for a commercial vehicle, is provided. The trailer comprises a brake system as described above.

In the following, embodiments of the present disclosure are described with reference to the enclosed drawings.
- Fig. 1: shows a schematic example of a parking valve assembly according to the present disclosure.
- Fig. 2: shows a schematic example of a parking valve assembly according to a first operating state,
- Fig. 3: shows the parking valve assembly of Fig. 2 in a second operating state,
- Fig. 4: shows the parking valve assembly of Fig. 2 in a third operating state,
- Fig. 5: shows a brake system with a parking valve assembly,
- Fig. 6: shows a brake system with a shunt function,
- Fig. 7: shows a brake system with a shunt function,
- Fig. 8: shows a brake system with an emergency override function, and
- Fig. 9: shows a brake system with an emergency override function.

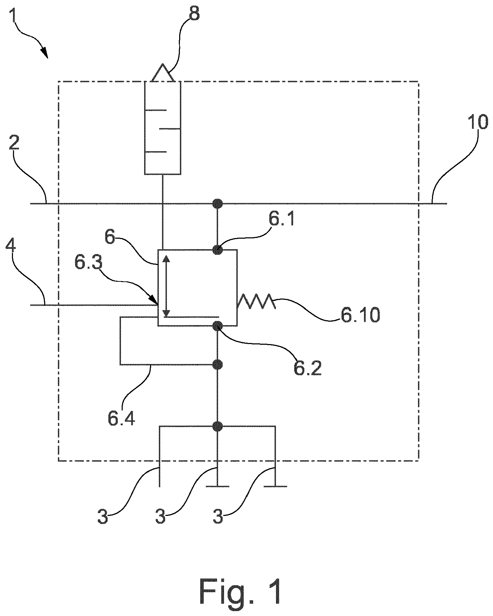

**Fig. 1** shows a parking valve assembly 1 for a pneumatic brake system The parking valve assembly 1 comprising:
- a valve assembly supply port 2 configured to receive a pneumatic supply pressure;
- at least one valve assembly output port 3 configured to output a pneumatic output pressure;
- a valve assembly control port 4 configured to receive a pneumatic control pressure; and
- a pressure-controlled valve 6.

The pressure-controlled valve 6 comprises a first control inlet 6.3 connected to the valve assembly control port 4 and a second control inlet 6.4 connected to the at least one valve assembly output port 3.

The pressure-controlled valve 6 is configured to connect the valve assembly supply port 2 to the at least one valve assembly output port 3, if the control pressure from the valve assembly control port 4 supplied to the first control inlet 6.3 exceeds a predetermined threshold or if a pressure supplied to the second control inlet 6.4 from the at least one valve assembly output port 3 exceeds a predetermined threshold.

The predetermined threshold can be set by a reset spring element 6.10, wherein the respective pressure supplied to the first control inlet 6.3 or to the second control inlet 6.4 must act against the reset spring element 6.10 to switch or respectively hold the pressure-controlled valve 6 in a switched state.

In the shown embodiment, a pressure output port 10 is shown. The pressure output port 10 is an optional port, that may be used to supply the supply pressure to further elements of the brake system the parking valve assembly is provided in.

The pressure-controlled valve 6 comprises a first opening 6.1 connected to the valve assembly pressure supply port 2 and a second opening 6.2 connected to the at least one valve assembly output port 3. The valve assembly control port 4 is connected to the first control inlet 6.3. The second control inlet 6.4 is connected to the second opening 6.2 of the pressure-controlled valve 6.

The parking valve assembly works as follows:
The parking valve assembly 1 may be used in a brake system, wherein the brake system is activated, i.e., the brake elements are activated, when no output pressure is output from the at least one valve assembly output port 3. The brake elements may be configured as spring-loaded brake elements, like spring-loaded brake cylinders. The brake system may be the brake system of a trailer of a commercial vehicle.

In the shown state, the parking valve assembly 1 is vented. I.e., the pressure-controlled valve 6 disconnects its first opening 6.1 from its second opening 6.2. Thereby, a connection between the valve assembly supply port 2 and the at least one valve assembly output port 3 is blocked and instead, the pressure-controlled valve 6 connects the second opening 6.2 and therefore, the at least one valve assembly output port 3 to an exhaust 8.

As no output pressure is output from the at least one valve assembly output port 3, the brake system may be activated, and the trailer may be in a parked state.

When a pneumatic supply pressure is supplied to the valve assembly supply port 2, e.g. as the trailer is coupled to a towing vehicle, wherein the supply pressure is supplied from the towing vehicle to the valve assembly supply port 2 via a coupling head of the brake system, the parking valve assembly 1 stays in the shown state, wherein the connection between the valve assembly supply port 2 and the at least one valve assembly output port 3 is blocked by the pressure-controlled valve 6. I.e., in this state, the valve assembly supply port 2 is pressurized however, no pneumatic pressure is supplied to the at least one valve assembly output port 3. I.e., the brake elements of the brake system stay activated.

For deactivating the brake elements, a control pressure is supplied to the valve assembly control port 4. The control pressure may be supplied to the valve assembly control port 4 by a control unit of the brake system. The control pressure is supplied to the first control inlet 6.3 of the pressure-controlled valve 6. If the control pressure exceeds the predetermined threshold set by the reset spring element 6.10, the pressure-controlled valve 6 changes its switching state, wherein it disconnects the connection between the second opening 6.2 and the exhaust 8, i.e. between the at least one valve assembly output port 3 and the exhaust 8, and wherein it connects the first opening 6.1 to the second opening 6.2 and therefore the valve assembly supply port 2 to the at least one valve assembly output port 3. In this state, pressure is supplied from the valve assembly supply port 2 to the at least one valve assembly output port 3 via the pressure-controlled valve 6. The output pressure supplied from the valve assembly output port 3 to the brake system causes the brake elements of the brake system to be deactivated.

Further, when the at least one valve assembly outlet port 3 is pressurized, pressure from the at least one valve assembly outlet port 3 respectively from the second opening 6.2 of the pressure-controlled valve 6 is supplied to the second control inlet 6.4. If this pressure supplied to the second control inlet 6.4, exceeds a predetermined threshold set by the reset spring element 6.10, the pressure-controlled valve 6 is configured to hold the current switching state, i.e., the connection between the valve assembly supply port 2 and the at least one valve assembly output port 3 independently from the control pressure supplied to the first control inlet 6.3. I.e., once the output pressure is increased in such way, that it exceeds the threshold set by the reset spring element 6.10, the parking valve assembly 1 can self-maintain the connection between the valve assembly supply port 2 and the and the at least one valve assembly outlet port 3. I.e., in this switching state, the brake elements of the brake system are permanently deactivated, wherein the deactivation is reliable and self-maintained. The trailer can now be moved by a towing vehicle.

For the further operation, the valve assembly control inlet 6.3 is depressurized. I.e., the pressure-controlled valve 6 can maintain the connection between the first opening 6.1 and the second opening 6.2 and therefore between the valve assembly supply port 2 and the at least one valve assembly output port 3 independently from the control pressure supplied to the control inlet 6.3.

To reactivate the brakes, e.g. for parking the trailer, in particular when the trailer is uncoupled from the towing vehicle, venting the valve assembly supply port 2 leads to a venting of the at least one valve assembly output port 3 and therefore to a reactivation of the brake elements of the brake system. When the valve assembly supply port 2 is vented, e.g. by uncoupling the trailer from the towing vehicle, e.g. by disconnecting the coupling head, or by the control unit, the pressure supplied to the at least one valve assembly output port 3 and to the second control inlet 6.4 is reduced in the same amount as it is the same pressure, namely the pneumatic supply pressure.

If the supply pressure supplied to the second control inlet 6.4 is below the threshold set by the reset spring element 6.10, the pressure-controlled valve 6 returns to the shown switching state, wherein the second opening 6.2 and thereby the at least one valve assembly output port 3 is connected to the exhaust 8, whereby the at least one valve assembly output port 3 is vented. Further, the second control inlet 6.4 is vented as it is connected to the exhaust 8 via the second opening 6.2 of the pressure-controlled valve 6. In this state, no output pressure is supplied from the at least one valve assembly output port 3 and therefore, the brake elements are activated. The brake system respectively the trailer, is in a parking state.

The parking valve assembly 1 according to Fig. 1 is a general concept to realize a brake system with a reliable deactivation of the brake elements when the vehicle is moving, wherein the deactivation is self-maintaining.

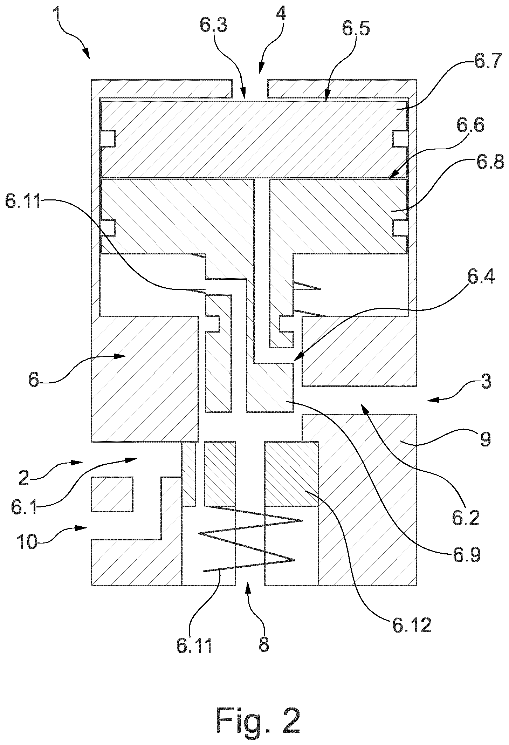

**Fig. 2** shows a schematic example of a parking valve assembly according to a first operating state.

The parking valve assembly 1 is shown in a depressurized state.

A sectional view of a valve body 9 is shown. The valve body 9 comprises a valve assembly supply port 2, a valve assembly output port 3, a valve assembly control port 4 and a pressure-controlled valve 6.

As the shown parking valve assembly 1 is an embodiment of the parking valve assembly 1 according to Fig. 1, the same elements are labelled with the same reference signs.

The pressure-controlled valve 6 comprises a first opening 6.1 connected to the valve assembly supply port 2, a second opening 6.2 connected to the valve assembly output port 3, a first piston 6.7 guided in the valve body 9 and limiting a first pressure chamber 6.5, a second piston 6.8 guided in the valve body 9 and limiting a second pressure chamber 6.6, wherein the second pressure chamber 6.6 is also limited by the first piston 6.7, a blocking element 6.12 and reset springs 6.11 acting on the second piston 6.8 and on the blocking element 6.12.

In the shown state, the first piston 6.7 is in a first piston position, wherein the first piston 6.7 is held in the first piston position by the reset spring 6.11 acting on the second piston 6.8, wherein the second piston 6.8 abuts to the first piston. In this position, the first pressure chamber 6.5 has a minimum extension, wherein the first pressure chamber 6.5 can be extended when the first piston 6.7 is moved downwards into the second piston position. In the drawing, the second pressure chamber 6.6 has a minimum extension and it is located between the first piston 6.7 and the second piston 6.8 below the first piston 6.7. The second piston 6.8 is shown in a first piston position, wherein the second pressure chamber 6.6 can be extended, when the second piston 6.8 is moved downwards and away from the first piston 6.7 into a second piston position.

A sliding element 6.9 extends downwards which is connected to the second piston 6.8, wherein the sliding element 6.9 extends downwards from the side of the second piston 6.8 turned away from the second pressure chamber 6.6. The sliding element 6.9 forms a part of the second piston 6.8.

In the shown state, the blocking element 6.12 is in a first position, wherein the blocking element 6.12 is held in the first position by the reset spring 6.11 acting on the blocking element 6.12. The blocking element 6.12 comprises a hole, in particular a through hole, wherein in the shown state, a connection from the valve assembly output port 3 to the exhaust 8 of the parking valve assembly 1 is established. Further, in the shown state, the blocking element 6.12 blocks a connection between the valve assembly supply port 2 and the valve assembly output port 3.

The parking valve assembly 1 works as follows.

When a pneumatic supply pressure is supplied to the valve assembly supply port 2, e.g. as the trailer is coupled to a towing vehicle, wherein the supply pressure is supplied from the towing vehicle to the valve assembly supply port 2 via a coupling head of the brake system, the parking valve assembly 1 stays in the shown state, wherein the connection between the valve assembly supply port 2 and the valve assembly output port 3 is blocked by the blocking element 6.12 of the pressure-controlled valve 6. I.e., in this state, the valve assembly supply port 2 is pressurized however, no pneumatic pressure is supplied to the valve assembly output port 3. I.e., the brake elements of the brake system stay activated.

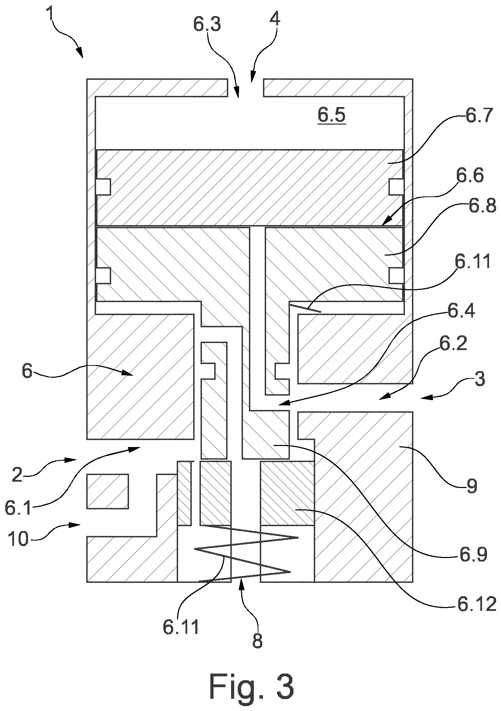

For deactivating the brake elements, a control pressure is supplied to the valve assembly control port 4. The first pressure chamber 6.5 is thereby pressurized and a force based on the control pressure acts downwards on the first piston 6.7. If this force exceeds a predetermined threshold set by the reset spring 6.11 acting to the second piston 6.8, the first piston 6.7 and the second piston 6.8 are moved downwards as a block due to the pressure in the first pressure chamber 6.5, wherein they reach theirs second piston position. This state is shown in **Fig. 3**. In this case, since both pistons abut to each other, the force of the reset spring 6.11 acting on the second piston 6.8 is applied also to the first piston 6.7. The control pressure may be supplied to the valve assembly control port 4 by a control unit of the brake system.

In the second piston position, the second piston 6.8, respectively the sliding element 6.9, abuts to the blocking element 6.12, thereby closing the opening of the blocking element 6.12 and thereby closing the connection from the second opening 6.2 to the exhaust 8. Further, in this state, the blocking element 6.12 was moved by the second piston 6.8, respectively the sliding element 6.9, downwards, wherein, when the second piston 6.8 is in its second piston position as shown in the drawing of Fig. 3, the blocking element 6.12 releases a connection from the first opening 6.1 to the second opening 6.2 and therefore from the valve assembly supply port 2 to the valve assembly output port 3. In this state, pressure is supplied from the valve assembly supply port 2 to the valve assembly output port 3 via the pressure-controlled valve 6. The output pressure supplied from the valve assembly output port 3 to the brake system causes the brake elements of the brake system to be deactivated.

Further, the sliding element 6.9 comprises a second control inlet 6.4. The second control inlet 6.4 is in the second piston position of the second piston 6.8 connected to the valve assembly output port 3 respectively to the second opening 6.2. Thereby, pressure from the valve assembly output port 3 respectively from the second opening 6.2 is supplied through a channel in the second piston 6.8 upwards into the second pressure chamber 6.6. Since the control pressure is still supplied to the first pressure chamber 6.5, the parking valve assembly 1 stays in the switching state shown in Fig. 3.

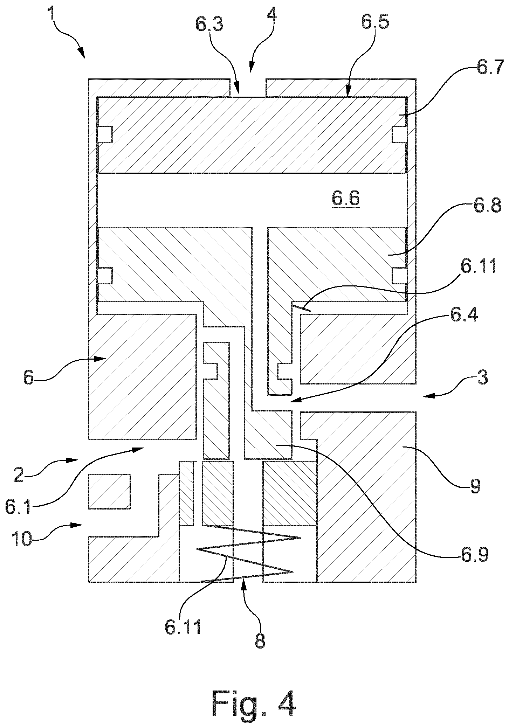

If the first pressure chamber 6.5 is depressurized since the control unit does not supply the control pressure to the valve assembly control port 4 anymore, the first piston 6.7 is moved upwards to the first piston position of the first piston 6.7 due to the pressure still being supplied to the second pressure chamber 6.6 from the second control inlet 6.4, wherein the second piston 6.8 is maintained in its second piston position. This switching state is shown **in** **Fig. 4**. In this state, the second pressure chamber 6.6 has its maximum extent since the first piston 6.7 and the second piston 6.8 are spaced apart from each other in the first piston position and in the second piston position, respectively.

In this state, the second piston 6.8 is maintained in the second piston position and the sliding element 6.9 abutting to the blocking element 6.12 and thereby maintaining the connection between the valve assembly supply port 2 and the valve assembly output port 3 independently from the position of the first piston 6.7. I.e., in this state, the connection between the valve assembly supply port 2 and the valve assembly output port 3 is self-maintained by the pressure-controlled valve 6 and therefore the deactivation of the brake elements of the brake system is carried out reliably.

To reactivate the brakes, e.g. for parking the trailer, in particular when the trailer is uncoupled from the towing vehicle, venting the valve assembly supply port 2 leads to a venting of the at least one valve assembly output port 3 and therefore to a reactivation of the brake elements of the brake system. When the valve assembly supply port 2 is vented, e.g. by uncoupling the trailer from the towing vehicle, e.g. by disconnecting the coupling head, or by the control unit, the pressure supplied to the valve assembly output port 3 and to the second control inlet 6.4 is reduced simultaneously as it is the same pressure, namely the pneumatic supply pressure.

If the supply pressure supplied to the second control inlet 6.4 is below the threshold set by the reset springs 6.11 which are connected in series due to the abutting of the second piston 6.8 and the blocking element 6.12, the second piston 6.8 returns to the first piston position as shown in Fig. 2 and the blocking element 6.8 returns to the position shown in Fig. 2 due to the reset springs 6.11. In this state, the connection between the exhaust 8 and the second opening 6.2 is reestablished leading to a venting of the output port 3 by the exhaust 8 via the second opening 6.2 and leading to a venting of the second control inlet 6.4, respectively the second pressure chamber 6.6 via the second opening 6.2. In this state, no output pressure is supplied from the at least one valve assembly output port 3 and therefore, the brake elements are activated. The brake system respectively the trailer, is in a parking state.

The parking valve assembly 1 according to Fig. 2 to 4 shows technical possibilities for realizing the general concept of the parking valve assembly 1 according to Fig. 1. In particular, the pressure-controlled valve 6 is provided in one valve body 9 wherein the axis of the pistons 6.7, 6.8 and the axis of the blocking element 6.12 are arranged coaxially to each other, leading to a compact design of the parking valve assembly 1.

In particular, the valve assembly 1 shown in Fig. 2 to 4 can be configured as a single valve.

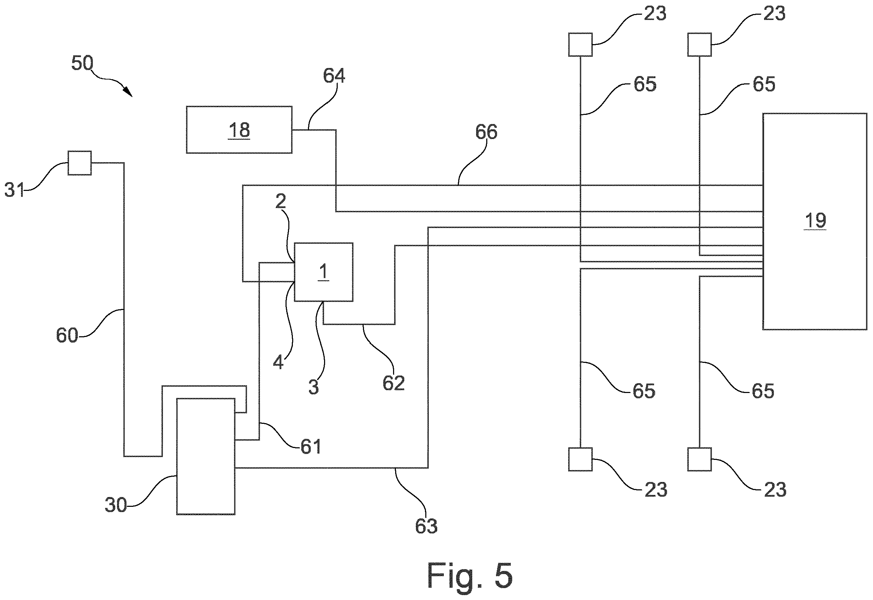

**Fig. 5** shows a brake system with a parking valve assembly.

The parking valve assembly 1 of the brake system 50 may be a parking valve assembly 1 as shown in Fig. 1.

The brake system 50 is a brake system for a trailer of a commercial vehicle.

The brake system 50 comprises a control unit 19. The control unit 19 is configured as electro-pneumatic control unit, wherein the control unit 19 comprises a pneumatic portion configured to control, receive and supply pneumatic pressure to the corresponding lines.

The control unit 19 is configured to supply a pneumatic control pressure via the line 66 to the valve assembly control port 4 of the parking valve assembly 1.

The control unit 19 is configured to supply a brake pressure via the lines 65 to the brake elements 23 of the brake system 50 for deactivating the brake elements 23, as the are configured as spring-loaded brake elements, like spring-loaded brake cylinders.

The control unit 19 is configured receive an output pressure from the at least one valve assembly supply port 3 of the parking valve assembly 1 via line 62, whereby the control unit 19 is configured to generate the brake pressure based on the received output pressure.

The brake system 50 comprises a brake system supply port 31 configured to supply a supply pressure to the brake system 50. The brake system supply port 31 may be configured as a coupling head configured to be connected to a pressure source of a towing vehicle, the trailer is coupled to.

The brake system supply port 31 is connected via line 60 to a control valve assembly 30. The control valve assembly 30 may be a park valve or a park and shunt valve configured to have control access to the brakes by an operator.

The brake system 50 comprises a pressure reservoir 18 connected via line 64 to the control unit 19, wherein the pressure reservoir 18 can supply pressure from the pressure reservoir 18 to the control unit 19.

The valve assembly supply port 2 of the parking valve assembly 1 is connected to the control valve assembly 30 via the line 61, whereby supply pressure from the brake system supply port 31 can be supplied to the valve assembly supply port 2 of the parking valve assembly 1.

In the shown state, the connection between the valve assembly supply port 2 and the at least one valve assembly output port 3 is disconnected.

The brake system 50 works as follows.

In a first operating state, the brake system 50 is in a parking state, wherein the valve assembly output port 3 is depressurized and therefore, the control unit 19 does not receive a pressure via line 62. Therefore, lines 65 are depressurized by the control unit 19 und therefore, the brake elements 23 are activated

Supply pressure is supplied to the valve assembly supply port 2 via the line 61 and the line 66 is depressurized as the control unit supplies no control pressure to the valve assembly control port 4.

To switch to a moving state, i.e., to deactivate the brake elements 23, the control unit 19 receives an electronic control signal (not shown) and supplies a pneumatic control pressure via line 66 to the valve assembly control port 4. As described in Fig. 1, this causes the parking valve assembly 1 to connect the valve assembly supply port 2 to the at least one valve assembly output port 3, whereby the supply pressure from the valve assembly supply port 2 is supplied to the at least one output port 3 and further via line 62 to the control unit 19. The control unit 19 generates a brake pressure based on the received output pressure or uses the received output pressure as brake pressure. The brake pressure is then supplied from the control unit 19 via the lines 65 to the brake elements 23 causing deactivation of the brake elements 23. I.e., the parking state is terminated and the brake system 50 is in a moving state.

As described above in the context to Fig. 1, the parking valve assembly 1 is configured to self-maintain the connection between the valve assembly supply port 2 and the at least one valve assembly output port 3. Therefore, the moving state with deactivated brake elements 23 is maintained as long as the valve assembly output port 3 supplies the output pressure to the control unit 19.

For re-activating the parking state, the control unit 19 may be configured to depressurize the line 62 and thereby to depressurize the at least one valve assembly output port 3. As described in the context of Fig. 1, this causes the parking valve assembly 1 to disconnect the valve assembly supply port 2 and the valve assembly output port 3 and to return to the initial switching state.

The depressurization of the line 62 leads to a deactivation of the brake elements 23 as no brake pressure is supplied thereto via the lines 65.

Further, for re-activating the parking state, the brake system supply port 31 may be disconnected from the supply source of the towing vehicle. Thereby, the lines 60 and 61 and thereby the valve assembly supply port 2 is depressurized causing a disconnection of the valve assembly supply port 2 from the at least one valve assembly output port 3 and therefore the line 62 and in particular the lines 65 are depressurized via the exhaust of the parking valve assembly 1 as described in the context of Fig. 1.

Further, for re-activating the parking state, the control valve assembly 30 may be operated to switch to a parking switching position of the valve causing a depressurization of the line 61 and therefore of the supply pressure to the valve assembly supply port, whereby no further output pressure can be output from the at least one valve assembly output port 3.

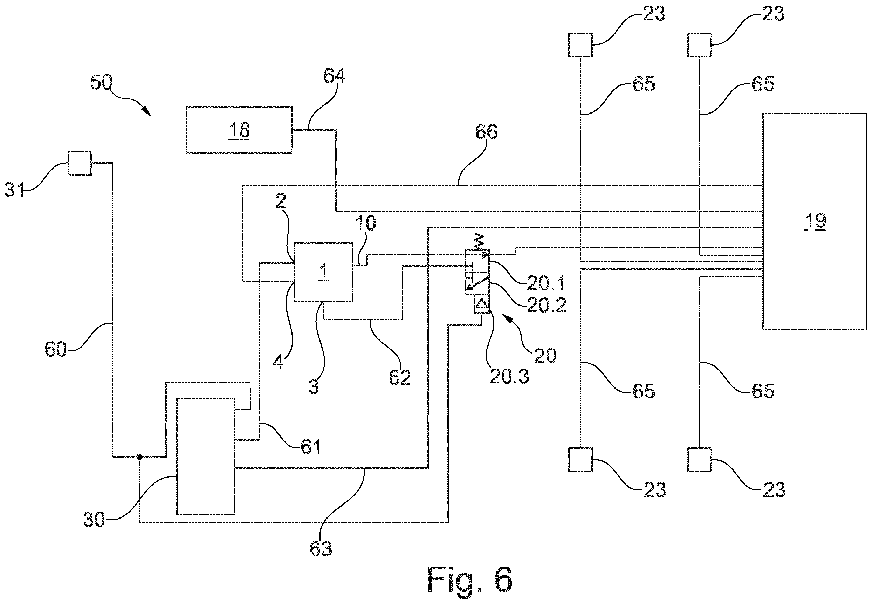

**Fig. 6** shows a brake system with a shunt function.

The brake system 50 corresponds to the brake system of Fig. 5. Therefore, the distinguishing features are described in the following.

According to this embodiment, the parking valve assembly 1 comprises a pressure output port 10 connected to a blocking valve 20.

The blocking valve 20 is arranged in the line 62 and has a first switching position 20.1 and a second switching position 20.2. Further, the blocking valve 20 comprises a control inlet 20.3 connected to the line 60 and therefore to the brake system supply port 31. The blocking valve is a normally closed valve. I.e., according to the first switching position 20.1, the blocking valve 20 is configured to disconnect the line 62 and therefore to disconnect the at least one valve assembly output port 3 from the control unit 19. As long as a supply pressure is supplied from brake system supply port 31 via the line 60 to the control inlet 20.3, the blocking valve 20 is held in the second switching position 20.2 connecting the line 62 and therefore, connecting the at least one valve assembly output port 3 to the control unit 19. In this state, the blocking valve 20 does not affect a supply of output pressure from the at least one valve assembly output port 3 to the control unit 19. Therefore, the brake system 50 works as the brake system shown in Fig. 5.

However, when the brake system is in a parking state with a depressurized brake system supply port 31 and a depressurized line 60, the brake system can be switched into a shunt state, wherein the brake elements 23 are deactivated.

For this purpose, an operator can activate the shunt state by operating the control valve assembly 30 accordingly. This establishes a connection from the pressure reservoir 18 to the control unit 19 via the line 64 further, from the control unit 19 to the control valve assembly 30 via line 63 and further from the control valve assembly 30 to the valve assembly supply port 2 via line 61. I.e., pressure is supplied from the pressure reservoir 18 to the valve assembly supply port 2, wherein the brake system supply port 31 is depressurized. As described in the context of Fig. 1, the valve assembly supply port 2 is connected to the pressure output port 10. As the blocking valve 20 is in the first switching position 20.1 as the control inlet 20.3 is depressurized, the pressure from the pressure reservoir 18 is further supplied to the control unit 19 causing deactivation of the brake elements 23 via the lines 65.

Therefore, the brake elements 23 are deactivated and therefore, the brake system is in a shunt state, wherein the trailer can be moved.

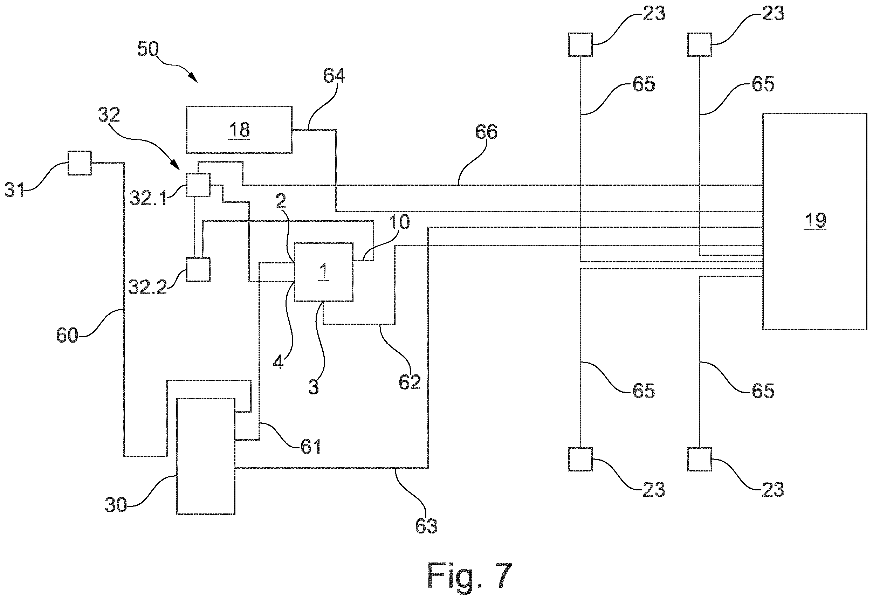

**Fig. 7** shows brake system with a shunt function.

The brake system 50 corresponds to the brake system of Fig. 5. Therefore, the distinguishing features are described in the following.

According to this embodiment, the parking valve assembly 1 comprises a pressure output port 10 connected to a second control valve assembly 32. The second control valve assembly 32 comprises a double check valve 32.1 and a connection valve 32.2. The double check valve 32.1 is arranged in the line 66 connecting the control unit 19 to the valve assembly control port 4. The connection valve 32.2 is arranged between the pressure output port 10 and the double check valve 32.1.

In a normal state of the brake system 50, the connection valve 32.2 disconnects the double check valve 32.1 from the pressure output port 10, e.g. because it is manually or automatically switched in this switching state. In this state, the line 66 is connected via the double check valve 32.1 to the valve assembly control port 4, since no further pressure acts on the double check valve 32.1.

For activating the shunt state of the brake system 50, an operator operates the control valve assembly 30 accordingly, whereby pressure from the pressure reservoir 18 is supplied to the control unit 19 via the line 64 and from the control unit 19 to the control valve assembly 30 via the line 63 and from the control valve assembly 30 to the valve assembly supply port 2 via line 61. Further, the pressure is supplied from the pressure output port 10 to the connection valve 32.2. If the connection valve 32.2 is switched in a connection state, e.g. manually or automatically, the pressure is further supplied from the connection valve 32.2 to the double check valve 32.1. As this is the only pressure in this state supplied to the double check valve 32.1, as the line 66 is depressurized, the double check valve 32.1 connects the valve assembly control port 4 to the connection valve 32.2. I.e., the pressure from the pressure reservoir 18 is then supplied to the valve assembly control port 4.

As the valve assembly supply port 2 as well as the valve assembly control port 4 are pressurized, the parking valve assembly 1 switches to the switching state as described in the context of Fig. 1, wherein the valve assembly supply port 2 is connected to the at least one valve assembly output port 3. Thereby, pressure from the valve assembly supply port 2 is supplied via the at least one valve assembly output port 3 and via the line 62 to the control unit 19 and thereby supplied to the brake elements 23 via the lines 65.

Therefore, the brake elements 23 are deactivated and therefore, the brake system is in a shunt state, wherein the trailer can be moved.

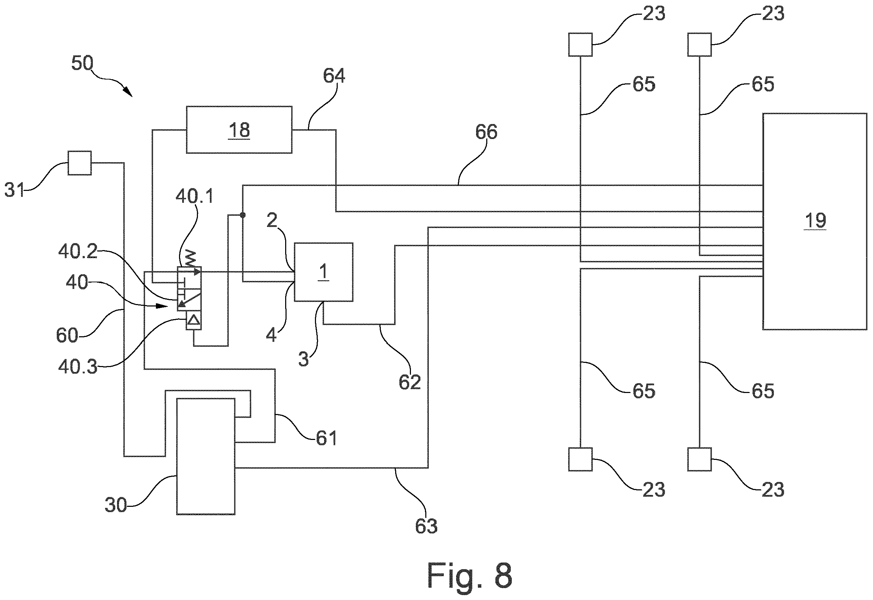

**Fig. 8** shows brake system with an emergency override function.

The brake system 50 corresponds to the brake system of Fig. 5. Therefore, the distinguishing features are described in the following.

Compared to the brake system 50 shown in Fig. 5, an override valve 40 is provided in the line 61 configured to, according to a first switching position 40.1, connect the control valve assembly 30 to the valve assembly supply port 2 and to disconnect the pressure reservoir 18 from the valve assembly supply port 2. According to a second switching position 40.2 the override valve 40 connects the valve assembly supply port 2 to the pressure reservoir 18 and disconnects the valve assembly supply port 2 from the control valve assembly 30. Further, the override valve 40 further comprises a control inlet 40.3 connected to the line 66 configured to supply the pneumatic control pressure to the valve assembly control port 4.

The override function may be used to maintain the brake elements 23 of the brake system 50 deactivated if the supply pressure supplied to the brake system supply port 31 drops unintendedly below a threshold that would lead to an activation of the brake elements 23. This may be the case when the brake system supply port 31 is unintendedly disconnected from the towing vehicle or if there is a leakage.

In this case, the control unit 19 may detect the unintended drop of the supply pressure and therefore send a pneumatic control pressure generated from the pressure of the pressure reservoir 18 supplied via the line 64 to the valve assembly control port 4.

Due to the connection of the control inlet 40.3 to the line 66, the control inlet 40.3 is pressurized as well. This leads to a switch of the override valve 40 from the first switching position 40.1 to the second switching position 40.2, wherein the pressure reservoir 18 is connected to the valve assembly supply port 2 and the line 61 and therefore the parts of the brake system 50 comprising the drop of pressure, are disconnected from the valve assembly supply port 2.

As in this state, the valve assembly supply port 2 and the valve assembly control port 4 are pressurized by the pressure from the pressure reservoir 18, the parking valve assembly connects the valve assembly supply port 2 to the at least one valve assembly output port 3 and therefore output pressure is supplied from the at least one valve assembly output port 3 to the control unit 19 via the line 62 causing the supply of a brake pressure from the control unit 19 to the brake elements 23 via the lines 65.

As long as the pneumatic control pressure is supplied from the control unit 19 to the valve assembly control port 4 and to the control inlet 40.3 this state is maintained and therefore, the brake elements 23 stay deactivated. I.e., when the towing vehicle is moving with the trailer, an unintended activation of the brake elements 23 is thereby avoided and the towing vehicle can continue moving, e.g. until a suitable spot is reached to stop the vehicle and the trailer.

As it can be seen in the drawing, the override valve 40 is always switched to the second switching position 40.2 if line 66 is pressurized, i.e., if the control unit 19 supplies a control pressure to the valve assembly control port. I.e., the pressure reservoir 18 is always connected to the valve assembly supply port 2, even if switching the brake system 50 to the override state is not intended. However, this does not affect the operation of the brake system 50 at all as for this particular point of time pressure supply to the valve assembly supply port 2 is maintained as it is now supplied from the pressure reservoir 18 and when the parking brake valve assembly 1 is in its state maintaining the output pressure at the at the at least one output port 3, the control unit 19 depressurizes line 66 and therefore, the override valve 40 returns to its first switching position 40.1 connecting line 61 to the valve assembly supply port 2 again and therefore connecting the brake system supply port 31 via line 60 and the control valve assembly 30 again to the valve assembly supply port 2. Therefore, maintaining the pressure supply to the valve assembly supply port 2 is maintained during the switching of the override valve 40. After disconnecting the pressure reservoir 18 from the valve assembly supply port 18, the pressure reservoir 18 may be recharged (not shown).

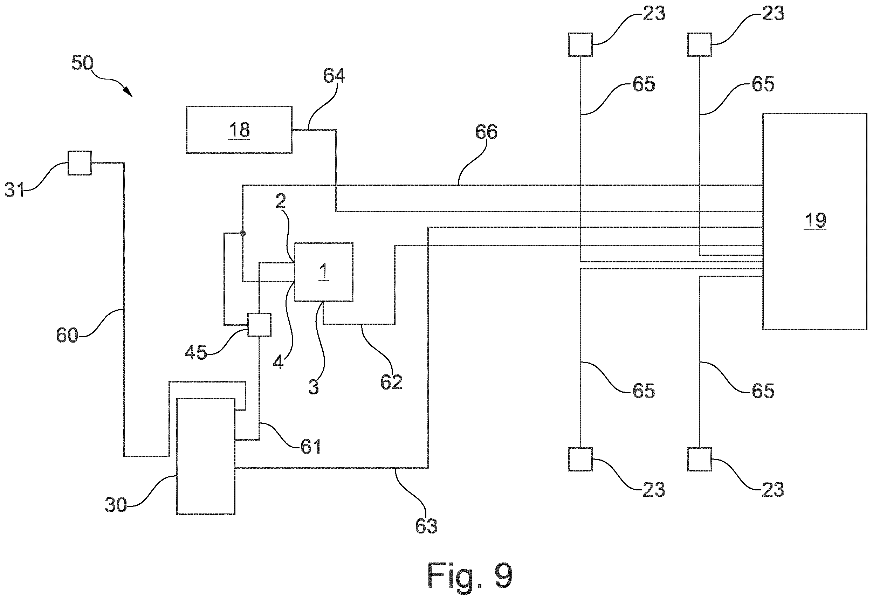

**Fig. 9** shows brake system with an emergency override function.

The brake system 50 corresponds to the brake system of Fig. 5. Therefore, the distinguishing features are described in the following.

Compared to the brake system 50 shown in Fig. 5, this brake system 50 comprises a override valve 45 provided in the line 61 between the control valve assembly 30 and the valve assembly supply port 2, wherein additionally, the override valve 45 is connected to the line 66. The override valve 45 is configured to supply the higher pressure of the pressure of the line 66 and of the line 61 to the valve assembly supply port 2. The override valve 45 may therefore be configured as a double check valve.

If a drop of the supply pressure at the brake system supply port 31 or in the line 60 or 61 occurs, the control unit 19 is configured to send a pneumatic control pressure from the pressure reservoir 18 via the lines 64 and 66 to the valve assembly control port 4 and to the override valve 45. Due to the dropping pressure in the line 61, the override valve 45 closes the connection to the line 61 and connects the valve assembly supply port 2 to the line 66. Therefore, the control pressure supplied to the valve assembly control port 4 is also supplied to the valve assembly supply port 2 via the override valve 45.

As in this state, the valve assembly supply port 2 and the valve assembly control port 4 are pressurized by the control pressure from the pressure reservoir 18, the parking valve assembly 1 connects the valve assembly supply port 2 to the at least one valve assembly output port 3 and therefore output pressure is supplied from the at least one valve assembly output port 3 to the control unit 19 via the line 62 causing the supply of a brake pressure from the control unit 19 to the brake elements 23 via the lines 65.

As long as the pneumatic control pressure is supplied from the control unit 19 to the valve assembly control port 4 this state is maintained and therefore, the brake elements 23 stay deactivated. I.e., when the towing vehicle is moving with the trailer, an unintended activation of the brake elements 23 is thereby avoided and the towing vehicle can continue moving, e.g. until a suitable spot is reached to stop the vehicle and the trailer.

At this point it is clarified that the embodiments of the brake system above shown in the Figures and described in the general part of the description configured to be switched to a shunt state and to be switched to an override state may be also combined with each other. I.e., there are further embodiments of the brake system disclosed, wherein the brake system is configured to be switched to a shunt state as described above and to be switched to an override state as described above.

The present disclosure relates to elements like valve assemblies or arrangements for brake systems, in particular, safepark systems, and such brake systems designed these valve assemblies to avoid rollaway accidents in case of wrong coupling head connection order by driver. In particular, for each of the embodiments shown in this disclosure, the brake elements of such brake system are only released acively be a signal, e.g. a control signal from the brake system or from the control unit.

### REFERENCE SIGNS

- 1: parking valve assembly
- 2: valve assembly supply port
- 3: valve assembly output port
- 4: valve assembly control port
- 6: pressure-controlled valve
- 6.1: first opening
- 6.2: second opening
- 6.3: first control inlet
- 6.4: second control inlet
- 6.5: first pressure chamber
- 6.6: second pressure chamber
- 6.7: first piston
- 6.8: second piston
- 6.9: sliding element
- 6.10: reset spring element
- 6.11: reset spring
- 6.12: blocking element
- 8: exhaust
- 9: valve body
- 10: pressure output port
- 18: pressure reservoir
- 19: control unit
- 20: blocking valve
- 20.1: first switching position
- 20.2: second switching position
- 20.3: control inlet
- 23: brake element
- 30: control valve assembly
- 31: brake system supply port
- 32: second control valve assembly
- 32.1: double check valve
- 32.2: connection valve
- 40: override valve
- 40.1: first switching position
- 40.2: second switching position
- 40.3: control inlet
- 45: override valve
- 50: brake system
- 60-66: lines

## Claims

1. A parking valve assembly (1) for a pneumatic brake system (50), the parking valve assembly (1) comprising:
- a valve assembly supply port (2) configured to receive a pneumatic supply pressure;
- at least one valve assembly output port (3) configured to output a pneumatic output pressure;
- a valve assembly control port (4) configured to receive a pneumatic control pressure; and
- a pressure-controlled valve (6), wherein
the pressure-controlled valve (6) comprises a first control inlet (6.3) connected to the valve assembly control port (4) and a second control inlet (6.4) connected to the at least one valve assembly output port (3), wherein the pressure-controlled valve (6) is configured to connect the valve assembly supply port (2) to the at least one valve assembly output port (3), if the control pressure from the valve assembly control port (4) supplied to the first control inlet (6.3) exceeds a predetermined threshold or if a pressure supplied to the second control inlet (6.4) from the at least one valve assembly output port (3) exceeds a predetermined threshold.

2. The parking valve assembly (1) according to claim 1, wherein
the pressure-controlled valve (6) is a relay valve.

3. The parking valve assembly (1) according to claim 1 or 2, further comprising
- a sliding element (6.9) configured to be moved between a first sliding element position and a second sliding element position according to the control pressure from the valve assembly control port (4) supplied to the first control inlet (6.3) and according to the pressure supplied to the second control inlet (6.4).

4. The parking valve assembly (1) according to claim 3, wherein
the pressure-controlled valve (6) comprising a first pressure chamber (6.5) and a second pressure chamber (6.6), wherein a first piston (6.7) is movably provided limiting the first pressure chamber (6.5) and a second piston (6.8) is movably provided limiting the second pressure chamber (6.6), wherein the first pressure chamber (6.5) is connected to the first control inlet (6.3) and the second pressure chamber (6.6) is connected to the second control inlet (6.4), wherein the first piston (6.7) and the second piston (6.8) are configured to apply a force on the sliding element (6.9) according to the pressure acting on the first piston (6.7) and the second piston (6.8).

5. The parking valve assembly (1) according to claim 4, wherein
the second pressure chamber (6.6) is limited by the first piston (6.7).

6. The parking valve assembly (1) according to claim 4 or 5, wherein
the second piston (6.8) is connected to the sliding element (6.9) or formed as one piece with the sliding element (6.9).

7. The parking valve assembly (1) according to one of the claims 3 to 6, wherein
the second control inlet (6.4) is provided on the sliding element (6.9).

8. The parking valve assembly (1) according to one of the preceding claims, further comprising a pressure output port (10) configured to output the supply pressure supplied to the valve assembly supply port 2.

9. The parking valve assembly (1) according to one of the preceding claims, comprising
- a valve body (9), wherein the pressure-controlled valve (6) is provided in the valve body (9).

10. The parking valve assembly (1) according to one of the preceding claims, comprising
- an exhaust (8), wherein the pressure-controlled valve (6) is configured to connect the at least one valve assembly output port (3) to the exhaust (8).

11. A brake system (50) for a trailer, the brake system (50) comprises
- a parking valve assembly (1) according to one of the claims 1 to 10;
- a control unit (19);
- at least one brake element (23), wherein
the at least one brake element (23) is pressure operated and configured to be activated when a brake pressure supplied to the at least one brake element (23) is below a predetermined threshold, and
the control unit (19) is configured to control a pneumatic control pressure supplied as the control pressure to the first valve assembly control port (4).

12. The brake system (50) according to claim 11, wherein
the brake system (50) is configured to deactivate a parking state, by supplying a control pressure exceeding the predetermined threshold to the valve assembly control port (4).

13. The brake system (50) according to claim 12, wherein
the brake system (50) is configured to maintain the deactivation of the parking state after deactivation when the control pressure is reduced below the predetermined threshold.

14. The brake system (50) according to one of the claims 11 to 13, wherein
the brake system (50) comprises a pressure reservoir (18) and is configured to switch to a shunt state when the at least one brake element (23) is activated.

15. A trailer for a vehicle, in particular for a commercial vehicle, comprising a brake system (50) according to one of the claims 11 to 14.
